# EUROPEAN PATENT SPECIFICATION

(11) **EP 1 259 369 B1**
(45) Date of publication and mention of the grant of the patent: **02.01.2004**
(21) Application number: 01905870.0
(22) Date of filing: 09.02.2001
(51) Int. Cl.: B29C 65/50, B29C 70/16

(54) **REINFORCED JOINT**
VERSTÄRKTES VERBINDUNGSELEMENT
JOINT RENFORCE

(30) Priority: 23.02.2000 GB 0004148
(43) Date of publication of application: 27.11.2002
(73) Proprietor: BAE Systems PLC, London SW1Y 5AD (GB)
(72) Inventor: HEATH, Robert James, Bristol BS35 3UE (GB)
(74) Representative: Wojcik, Lucy Eleanor
(86) International application number: PCT/GB2001/000529
(87) International publication number: WO 2001/062474

(56) References cited:
- US-A- 5 879 492
- US-A- 5 968 639

## Description

The present invention relates to the reinforcement of joints in laminated composite structures, and in particular, though not exclusively, to joints in laminated composite structures of aircraft.

Composite laminates are weak in their through thickness direction and susceptible to failure due to tension sheer and peel stresses. Bonded joints between laminated members are also prone to similar weaknesses. Experience has shown that failure in bonded joints tends not to occur in the adhesive interface between the members but in the members themselves. Typically failure is by delamination between the first and second plys of the laminate member.

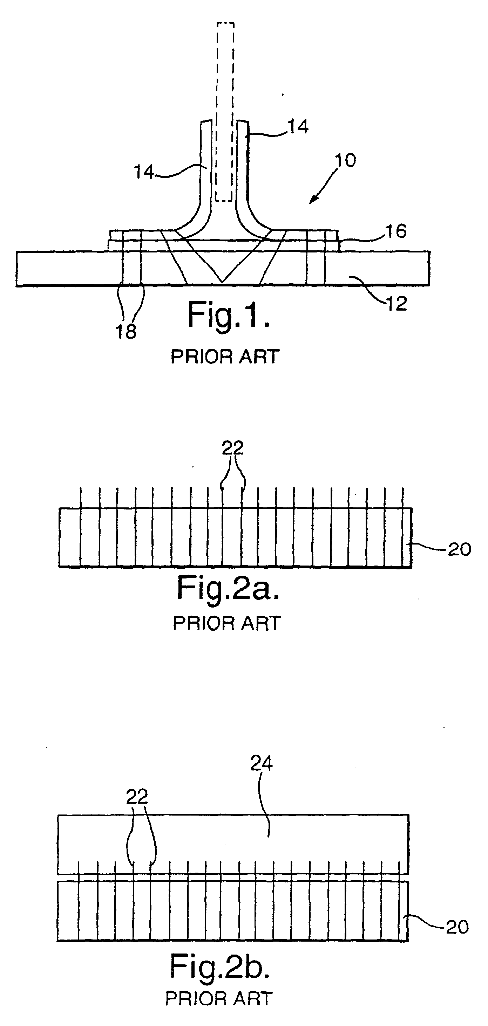

One solution to the above mentioned problem of delamination is shown in figure 1 which shows a cross-section through a joint, generally designated 10, comprising a skin 12 and upstand members 14, and an intermediate adhesive layer 16. To strengthen the joint 10, there are provided pins 18 which extend between the skin 12 and upstand members 14 and through the adhesive layer 16. A disadvantage of this arrangement is that upstand members 14 have to be co-cured with the skin 12, which may present problems if the skin 12 and upstand members 14 are to be sourced from different suppliers in an uncured state, and a curing operation must be carried out to join the components. It should be noted that the adhesive layer 16 is optional when co-curing composite components as the resin impregnated in the components will form a bond of its own. The adhesive layer 16 improves the strength of the joint 10 by modifying the local stress distribution.

Continuing with the example of the joint 10 described above, it is a preferred manufacturing method to either cure the skin first and then co-bond the upstand members or vice versa. To this end a joint of the type shown in figures 2a and 2b has been proposed. A first pre-cured laminated member 20 is provided with pins 22 extending there through and projecting outwardly from one side. A second laminated member 24 is then positioned over the first member 20 such that the pins 22 penetrate the second member 24.The second member 24 is then co-cured to the first member 20.

The pin lengths may be chosen either fully or partially penetrate the thickness of the second member 24. A problem with this proposed solution is that the members 20, 24 must be supplied in cured and uncured states respectively, and an additional curing step still must be carried out to assemble the members 20, 24.

According to a first aspect of the present invention, there is provided a pre-cured laminated component comprising:-
a joining face which is adapted to be bonded by a layer of adhesive to another article; and
elongate reinforcing means extending through the thickness of the component towards the joining face and terminating at the joining face of the component.

The reinforcing means reinforce the plys of the laminated member in the region of the bond and thus reduce the possibility of stress induced failure due to delamination of the laminated member.

The reinforcing means may extend completely or partially through the thickness of the laminated component. In a preferred embodiment the reinforcing means comprises at least one elongate pin-like member. Preferably the elongate reinforcing means comprises a plurality of spaced apart pin-like members. The pin-like members may be equidistantly spaced or grouped in a predetermined manner. The configuration of such a grouping may be dependent upon anticipated stress levels in the bond, and/or the component.

According to a second aspect of the present invention there is provided a bonded joint assembly comprising:-
a first pre-cured laminated component having a first joining face;
a second pre-cured laminated component having a second joining face; and
a layer of adhesive interspersed between the first and second joining faces;
characterised in that at least one of the first or second laminated components comprises a component as described above.

Each of the laminated components may comprise a component as described above, and the elongate reinforcing means of each component is substantially parallel with respect to the elongate reinforcing means of the other component. The elongated reinforcing means of each component may also be substantially co-linear with the elongate reinforcing means of the other component.

According to a third aspect of the present invention there is provided a method of reinforcing a pre-cured laminated component in the region of an adhesive bond, the method comprising the steps of:-
providing a laminated component having a joining face;
providing at least one elongate reinforcing means in the laminated member which extends through the thickness thereof in the direction of the joining face and terminates at the joining face;
curing the laminated component; and
applying a layer of adhesive to the joining face of the cured laminated component.

Embodiments of the invention will now be described with reference to the accompanying drawings in which:
Figure 1 shows a cross-sectional side view of a first prior art joint type;
Figures 2a and 2b show cross -sectional side views of a second prior art joint type;
Figure 3 and 4 show cross-sectional side views of a joint in accordance with a first embodiment of the invention; and

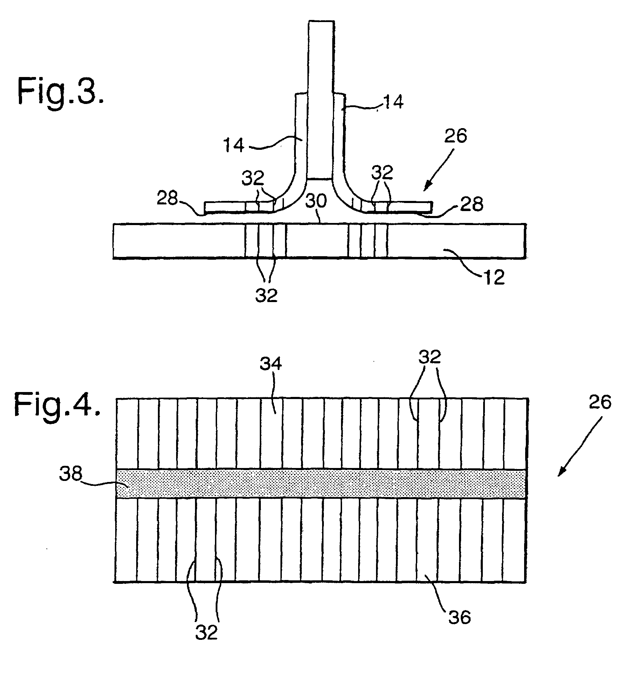

Referring now to figures 3 and 4 there is shown a joint, generally designated 26, in accordance with an embodiment of the present invention. Figure 3 shows a skin 12 and upstand 14 arrangement as described above in relation to the prior art. Both the skin 12 and upstand members 14 have opposing joining faces 28, 30 between which the joint 26 is made. The skin 12 and upstand members 14 are shown to be separated and without an intermediate adhesive layer for the purpose of clarity in describing the joint 26. Both the skin 12 and upstand members 14 are provided with reinforcing pins 32 however, in contrast to the prior art, the pins do not extend across the joint 26 but terminate at the respective joining faces 28, 30.

In use, the pins 32 are inserted into the skin 12 and upstand members 14, and the skin and upstand members 12,14 are then pre-cured. The joint 26 can then be made by a simple adhesive bonding operation at an assembly site as opposed to a more complex curing operation. The skin and upstand members 12,14 can be sourced from different suppliers and the need for liaison therebetween with regard to compatibility of uncured sections, pin position and penetration depth is eliminated. Figure 4 shows a close-up view of the above described joint 26 between two members 34,36 and includes the adhesive layer 38.

## Claims

1. A pre-cured laminated component comprising:-
a joining face (28) which is adapted to be bonded by a layer of adhesive (38) to another article; and
elongate reinforcing means (32) extending through the thickness of the component (14) towards the joining face and terminating at the joining face of the component.

2. The component of claim 1, wherein the elongate reinforcing means (32) extends partially through the thickness of the laminated component (14).

3. The component of claim 1 or claim 2, wherein the elongate reinforcing means comprises at least one elongate pin-like member (32).

4. The component of claim 3, wherein the elongate reinforcing means comprises a plurality of spaced apart pin-like members (32).

5. The component of claim 4, wherein the pin-like members (32) are equidistantly spaced.

6. The component of claim 4, wherein the pin-like members (32) are grouped in a predetermined pattern.

7. A bonded joint assembly comprising:-
a first pre-cured laminated component (14) having a first joining face (28);
a second pre-cured laminated component (12) having a second joining face (30); and
a layer of adhesive (38) interspersed between the first and second joining faces;
**characterised in that** at least one of the first or second laminated components comprises a component (12, 14) according to any one of the preceding claims.

8. The bonded joint assembly of claim 7, wherein the first and second laminated components (12, 14) each comprise a component according to any one of claims 1 to 6, and wherein the elongate reinforcing means (32) of each component is substantially parallel with respect to the elongate reinforcing means of the other component.

9. The bonded joint assembly of claim 8, wherein the elongate reinforcing means (32) of each component (12, 14) is substantially co-linear with the elongate reinforcing means of the other component.

10. A method of reinforcing a pre-cured laminated component in the region of an adhesive bond, the method comprising the steps of:-
providing a laminated component (14) having a joining face (28);
providing at least one elongate reinforcing means (32) in the laminated component (14) which extends through the thickness thereof in the direction of the joining face (28) and terminates at the joining face;
curing the laminated component; and
applying a layer of adhesive (38) to the joining face (28) of the cured laminated component (14).

## Patentansprüche

1. Vorgehärtete laminierte Komponente mit den folgenden Merkmalen:
eine Verbindungsfläche (28), die über eine Kleberschicht (38) mit einem anderen Gegenstand zu verbinden ist; und
langgestreckte Verstärkungsmittel (32), die sich über die Dicke der Komponente (14) nach der Verbindungsfläche erstrecken und an der Verbindungsfläche der Komponente enden.

2. Komponente nach Anspruch 1, bei welcher die langgestreckten Verstärkungsmittel (32) sich teilweise über die Dicke der laminierten Komponente (14) erstrecken.

3. Komponente nach den Ansprüchen 1 oder 2, bei welcher die langgestreckten Verstärkungsmittel aus wenigstens einem stiftartigen Glied (32) bestehen.

4. Komponente nach Anspruch 3, bei welcher die langgestreckten Verstärkungsmittel aus einer Vielzahl von in Abstand zueinander angeordneten, stiftartigen Gliedern (32) bestehen.

5. Komponente nach Anspruch 4, bei welcher die stiftartigen Glieder (32) im gleichen Abstand zueinander angeordnet sind.

6. Komponente nach Anspruch 4, bei welcher die stiftartigen Glieder (32) in einem vorbestimmten Muster gruppiert sind.

7. Verklebter Verbindungsaufbau mit den folgenden Merkmalen:
eine erste vorgehärtete laminierte Komponente (14) besitzt eine erste VerbindungsOberfläche (28);
eine zweite vorgehärtete laminierte Komponente (12) besitzt eine zweite Verbindungsfläche (30) und
eine Kleberschicht (38) ist zwischen der ersten und zweiten Verbindungsfläche angeordnet,
**dadurch gekennzeichnet, daß** wenigstens eine der ersten oder zweiten laminierten Komponenten eine Komponente (12, 14) gemäß einem der vorhergehenden Ansprüche aufweist.

8. Verklebter Verbindungsaufbau nach Anspruch 7, bei welchem die erste und zweite laminierte Komponente (12, 14) jeweils eine Komponente gemäß einem der Ansprüche 1 bis 6 aufweist, und die langgestreckten Verstärkungsmittel (32) einer jeden Komponente im wesentlichen parallel zu den langgestreckten Verstärkungsmitteln der anderen Komponente verlaufen.

9. Verklebter Verbindungsaufbau nach Anspruch 8, bei welchem die langgestreckten Verstärkungsmittel (32) einer jeden Komponente (12, 14) im wesentlichen kolinear zu den langgestreckten Verstärkungsmitteln der anderen Komponente liegen.

10. Verfahren zur Verstärkung einer vorgehärteten lamininierten Komponente im Bereich einer Klebeverbindung, wobei das Verfahren die folgenden Schritte aufweist:
es wird eine laminierte Komponente (14) mit einer Verbindungsfläche (28) vorgesehen;
es wird wenigstens ein langgestrecktes Verstärkungsglied (32) in die laminierte Komponente (14) eingesteckt, die sich über die Dicke in Richtung auf die Verbindungsfläche (28) hin erstreckt und an der Verbindungsfläche endet;
es wird die laminierte Komponente ausgehärtet und
es wird eine Kleberschicht (38) auf der Verbindungsfläche (28) der ausgehärteten laminierten Komponente (14) aufgebracht.

## Revendications

1. Un composant stratifié prédurci comportant :
une face de jonction (28) qui est adaptée pour être collée par une couche d'adhésif (38) à un autre article ; et
un moyen de renforcement allongé (32) s'étendant au travers de l'épaisseur du composant (14) en direction de la face de jonction et se terminant à la face de jonction du composant

2. Le composant de la revendication 1, dans lequel le moyen de renforcement allongé (32) s'étend partiellement au travers de l'épaisseur du composant stratifié (14).

3. Le composant de la revendication 1 ou la revendication 2, dans lequel le moyen de renforcement allongé comporte au moins un élément allongé semblable à une broche (32).

4. Le composant de la revendication 3, dans lequel le moyen de renforcement allongé comporte une pluralité d'éléments semblables à des broches espacés les uns des autres (32).

5. Le composant de la revendication 4, dans lequel les éléments semblables à des broches (32) sont espacés de façon équidistante.

6. Le composant de la revendication 4, dans lequel les éléments semblables à des broches (32) sont groupés selon un modèle prédéterminé.

7. Un assemblage à joints collés comportant :
un premier composant stratifié prédurci (14) ayant une première face de jonction (28) ;
un deuxième composant stratifié prédurci (12) ayant une deuxième face de jonction (30) ; et
une couche d'adhésif (38) intercalée entre les première et deuxième faces de jonction ;
**caractérisé en ce que** au moins soit le premier, soit le deuxième composant stratifié comporte un composant (12, 14) selon une quelconque des revendications précédentes.

8. L'assemblage à joints collés de la revendication 7, dans lequel les premier et deuxième composants stratifiés (12, 14) comportent chacun un composant selon une quelconque des revendications 1 à 6, et dans lequel le moyen de renforcement allongé (32) de chaque composant est substantiellement parallèle au moyen de renforcement allongé de l'autre composant

9. L'assemblage à joints collés de la revendication 8, dans lequel le moyen de renforcement allongé (32) de chaque composant (12, 14) est substantiellement colinéaire au moyen de renforcement allongé de l'autre composant.

10. Un procédé de renforcement d'un composant stratifié prédurci dans la zone d'une liaison adhésive, le procédé comportant les étapes de :
fournir un composant stratifié (14) ayant une face de jonction (28) ;
fournir au moins un moyen de renforcement allongé (32) dans le composant stratifié (14) qui s'étend au travers de l'épaisseur de celui-ci dans la direction de la face de jonction (28) et se termine à la face de jonction ;
durcir le composant stratifié ; et
appliquer une couche d'adhésif (38) sur la face de jonction (28) du composant stratifié durci (14).
